# FASCICULE DE BREVET EUROPEEN

(11) **EP 2 585 308 B1**
(45) Date de publication et mention de la délivrance du brevet: **02.10.2019**
(21) Numéro de dépôt: 11738307.5
(22) Date de dépôt: 22.06.2011
(51) Int. Cl.: B42D 25/305, B42D 25/29, B42D 25/351, B42D 25/364, B42D 25/391, G07D 7/207, G06K 9/00, G07D 7/128

(54) **PROCEDE D'AUTENTIFICATION ET/OU D'IDENTIFICATION D'UN ARTICLE DE SECURITE**
VERFAHREN ZUR AUTHENTIFIZIERUNG UND/ODER IDENTIFIZIERUNG EINES SICHERHEITSELEMENTS
METHOD FOR THE AUTHENTICATION AND/OR IDENTIFICATION OF A SECURITY ITEM

(30) Priorité: 22.06.2010 FR 1054949
(43) Date de publication de la demande: 01.05.2013
(73) Titulaire: Oberthur Fiduciaire SAS, 75008 Paris (FR)
(72) Inventeur: ROSSET, Henri, F-38730 Le Pin (FR); DIETEMANN, Philippe, F-38400 Saint-martin-d'eres (FR)
(74) Mandataire: Nony
(86) Numéro de dépôt international: PCT/IB2011/052742
(87) Numéro de publication internationale: WO 2011/161636

(56) Documents cités:
- WO-A1-02/17242
- WO-A1-98/15418
- WO-A1-99/37488
- WO-A1-2009/019038
- US-A1- 2002 008 380

## Description

La présente invention se rapporte au domaine des articles de sécurité, et notamment des documents de sécurité.

### Arrière-plan

Des procédés reposant sur la persistance rétinienne pour permettre la restitution d'un mouvement sont connus de l'art antérieur. On connait par exemple le phénakistiscope qui utilise un disque en carton, percé de fentes, sur lequel un mouvement est décomposé en une suite d'images fixes, et un manche permettant son maintien pendant sa rotation. On connait également le zootrope qui consiste en un tambour percé de fentes sur sa moitié supérieure et abritant à l'intérieur, dans sa partie inférieure, une bande de dessins décomposant un mouvement. Lorsque l'on entraîne en rotation le tambour et que l'on regarde fixement l'intérieur à travers les fentes, les dessins s'animent. On connaît encore le praxinoscope, dont le fonctionnement repose sur le principe du zootrope, qui comporte plusieurs miroirs autour de son axe central afin de visualiser l'illusion de mouvement.

On connait en outre des procédés de création d'illusions de mouvement décrits dans les documents US 5 901 484, US 6 286 873 et US 2005/0183300. Ces procédés exploitent le principe de décomposition du mouvement permettant la restitution d'un mouvement « à trames ». Un support est porteur de plusieurs images fragmentées, correspondant par exemple à la décomposition d'un objet ou d'un animal en mouvement, et un film transparent porteur d'un réseau de traits parallèles ayant une épaisseur et un espacement entre les traits donnés est placé sur le support. Un mouvement relatif entre les images fragmentées et le réseau de traits parallèles permet de créer l'illusion d'un mouvement.

On connaît également la superposition, par pliage d'un article, de deux éléments. La demande WO 2006/029744 décrit en particulier la superposition, par pliage d'un document, de deux éléments optiques permettant d'obtenir des effets optiques différents selon la distance séparant lesdits éléments optiques. Par ailleurs, la demande WO 02/17242 décrit la superposition, par pliage d'un article, d'un hologramme et d'une information cachée afin de révéler ladite information cachée. Enfin, la demande US 2006-0290136 décrit la superposition, par pliage d'un document, d'une image codée et d'une lentille optique pour décoder ladite image.

On connaît en outre de la demande WO 2005/106808 un procédé d'identification d'un document, par exemple un billet de banque, consistant à superposer une région du document à une image affichée sur un écran, l'image étant issue d'un système de décodage envoyé *via* un réseau.

On connaît encore de la demande WO 2006/018171 un élément de sécurité comportant des caractéristiques d'authentification présentant un premier aspect en lumière transmise et un deuxième aspect, différent du premier, lorsque l'élément de sécurité est placé sur un fond particulier, par exemple un écran à cristaux liquides (LCD).

La demande WO 2009/019038 décrit un procédé de vérification d'un document de valeur comportant un substrat ayant au moins une région de transmission, comportant une première information, une deuxième information en corrélation avec la première information étant produite par un affichage séparé, la première et/ou deuxième information comportant une information cachée, visible en lumière transmise uniquement lorsque la première information est superposée à la deuxième information produite sur l'écran séparé.

### Résumé

Il existe un besoin pour renforcer encore la sécurité et les processus d'authentification et/ou d'identification des articles de sécurité, afin notamment d'augmenter la difficulté de contrefaçon de ces articles.

Il existe également un besoin pour fournir un procédé d'authentification et/ou d'identification d'articles de sécurité qui soit simple à mettre en oeuvre pour l'homme de la rue, notamment à l'aide des outils technologiques à sa disposition.

L'invention se propose ainsi selon l'un de ses aspects d'exploiter le principe de la décomposition en mouvement exposé précédemment afin de pouvoir authentifier et/ou identifier les articles de sécurité par la visualisation de mouvements décomposés, provoquant ainsi une illusion de mouvement.

L'invention a ainsi pour objet, selon l'un de ses aspects, un procédé d'authentification et/ou d'identification d'un article de sécurité, notamment un document de sécurité, selon la revendication 1.

Grâce à l'invention, il est possible de bénéficier d'un procédé permettant l'authentification et/ou l'identification d'un article de sécurité grâce à la restitution d'une information d'authentification et/ou d'identification lors d'un changement de l'angle d'observation des première et deuxième images superposées.

Il est encore possible de conférer un effet ludique et/ou attractif à l'utilisateur de l'article de sécurité par la manière dont une information cachée est révélée, par exemple par un effet de mouvement ou d'animation.

Lors d'un changement de l'angle d'observation des première et deuxième images superposées, un effet de mouvement ou d'animation peut être observé, notamment un effet de mouvement ou d'animation d'images imbriquées.

L'information d'authentification et/ou d'identification peut avantageusement ne pas être accessible, notamment ne pas être visible, par exemple à l'oeil nu ou avec un dispositif quelconque, autrement que lors d'un changement d'angle d'observation des première et deuxième images superposées. L'authentification et/ou l'identification de l'article de sécurité peut ainsi ne résulter que de l'observation de l'article de sécurité lors d'un changement d'angle d'observation des première et deuxième images superposées.

La révélation de l'information d'authentification et/ou d'identification peut se faire par effet de parallaxe. L'utilisateur peut notamment par variation de l'angle d'observation des première et deuxième images superposées faire apparaître une succession d'images, ce qui permet de créer un effet d'animation par exemple. En particulier, une des images, par exemple sous forme de trame de révélation, peut permettre à l'oeil humain de visualiser une image différente à la fois, le cerveau de l'observateur pouvant reconstituer par exemple un mouvement ou observer une information cachée.

L'authentification et/ou l'identification de l'article de sécurité peut se faire indifféremment par observation de la face recto ou verso de l'article de sécurité, notamment par observation du côté de la première et/ou de la deuxième face du substrat de l'article de sécurité.

La deuxième image peut être projetée dans son plan de focalisation pour être superposée à la première image. En variante, la première image peut être superposée à la deuxième affichée dans le plan d'un écran de l'imageur électronique.

La distance séparant les plans des première et deuxième images peut correspondre à l'épaisseur du substrat. En variante, elle peut correspondre à l'épaisseur du substrat et à l'épaisseur d'au moins un élément intermédiaire entre le dispositif de formation de la deuxième image et le substrat, par exemple l'épaisseur d'un écran de l'imageur électronique.

Le substrat peut s'étendre ou non d'un bord à l'autre de l'article de sécurité. En particulier, le substrat être situé localement dans l'article de sécurité.

L'épaisseur du substrat peut être inférieure ou égale à l'épaisseur de l'article de sécurité.

Le substrat comportant la première image peut figurer dans une fenêtre de l'article de sécurité.

Des exemples de réalisation de fenêtres de sécurité dans les articles de sécurité sont par exemple décrits dans les publications GB 1 552 853, qui divulgue la création d'une fenêtre notamment par transparentisation, découpe laser, abrasion ou incision mécanique, EP 0 229 645 qui décrit la création en phase humide d'une fenêtre sur une face ou sur les deux faces d'un papier bijet, WO 2004/096482 qui décrit la création d'une fenêtre par découpe laser, CA 2 471 379 qui décrit la création d'une fenêtre transparente et association avec un élément de sécurité et WO 2008/006983 qui décrit la création d'une fenêtre transparente sur un papier bijet.

Le substrat comportant la première image peut figurer sur une zone d'opacité réduite de l'article de sécurité. Une telle zone d'opacité réduite peut notamment correspondre à une zone de moindre épaisseur, à une zone rendue transparente ou à une zone comprenant au moins une couche d'un matériau de moindre opacité. L'opacité de ladite zone d'opacité réduite sera en particulier suffisamment faible pour permettre une observation en transmission de la première image. De préférence, l'image est visible en transmission et en réflexion.

La deuxième image produite par l'imageur électronique peut être affichée sur l'imageur électronique, par exemple sur un écran de l'imageur électronique.

En variante, la deuxième image peut être projetée par l'imageur électronique, par exemple sur un fond ou sur l'article de sécurité. En particulier, lorsque la deuxième image est projetée sur un fond, la première image de l'article de sécurité peut être superposée à la deuxième image projetée sur le fond de sorte que le substrat se situe entre les première et deuxième images. En variante, la deuxième image peut être projetée au moins partiellement sur la face du substrat du côté opposé à la première image de l'article de sécurité.

Le substrat peut comporter ou être constitué par une matière thermoplastique, par exemple une polyoléfine, par exemple du polyéthylène (PE), du polychlorure de vinyle (PVC), du polyester, du polyéthylène téréphtalate (PET), du polycarbonate (PC), du polyester carbonate (PEC), du polyéthylène téréphtalate glycol (PETG), de l'acrylonitrile butadiène styrène (ABS) ou un film collecteur de lumière par exemple du type « guide d'ondes », par exemple un film luminescent à base de polycarbonate commercialisé par la société BAYER sous la dénomination LYSA®. Lors de l'utilisation d'un film guide d'onde, la première image est obtenue de préférence par gravure laser.

Le substrat peut comporter des fibres cellulosiques et notamment du papier. En particulier, le substrat peut être un papier suffisamment translucide pour permettre l'observation de l'information d'authentification et/ou d'identification, notamment un papier calque.

Le substrat peut également être rendu transparent par application d'une composition généralement grasse qui le rend transparent de façon permanente, par exemple une composition faite d'huile et de matériau minéral transparent, comme décrit dans le brevet US 2 021 141, ou par exemple une composition sous forme d'une cire combinée à un solvant, comme décrit dans le brevet US 1 479 437.

On peut aussi rendre transparent le substrat en appliquant localement une cire par transfert à chaud, comme décrit dans le brevet US 5 118 526.

On peut encore utiliser pour le substrat une couche fibreuse comportant une matière thermofusible, par exemple du polyéthylène, comme décrit dans le brevet EP 0 203 499, qui sous l'action locale de la chaleur verra sa transparence varier.

L'épaisseur du substrat est comprise par exemple entre 10 µm et 1 mm, étant par exemple inférieure à 25 µm.

L'article et l'imageur peuvent venir en contact ou non lorsque les images sont superposées.

On entend par « imageur électronique », un dispositif électronique permettant de produire une image par affichage ou projection.

L'imageur électronique peut par exemple comporter un écran sur lequel la deuxième image est affichée.

L'imageur électronique peut comporter un écran de tout type connu, par exemple un écran d'ordinateur, de téléviseur, de téléphone portable, d'un livre ou agenda électronique, d'un assistant numérique personnel (« Personal Digital Assistant »), d'un cadran de montre, cette liste étant non limitative.

L'imageur électronique peut être un projecteur, dépourvu ou non d'écran sur lequel s'effectue la projection. Le projecteur peut permettre de projeter la deuxième image sur un fond ou sur l'article de sécurité, le substrat étant situé entre la première image et la deuxième image.

L'imageur électronique peut par exemple être un projecteur de tout type connu, par exemple un projecteur de diapositives, un vidéoprojecteur, un rétroprojecteur, un picoprojecteur ou nanoprojecteur, par exemple un vidéoprojecteur miniaturisé intégré dans un appareil portable (PDA, téléphone portable, ordinateur portable, par exemple), un projecteur cinématographique, cette liste étant non limitative.

L'imageur électronique permet de préférence de générer une image pixélisée, dont chaque pixel est adressable individuellement, de préférence avec au moins 256 niveaux de gris ou couleurs, de résolution comprise entre 50 et 1000 dpi (« Dot Per Inch » ou « Points Par Pouce »).

L'imageur électronique peut être un projecteur projetant une lumière visible, infrarouge (IR) et/ou ultra-violette (UV).

La première image peut par exemple être réalisée au moins partiellement à l'aide d'une encre visible et/ou luminescente, par exemple fluorescente et/ou phosphorescente.

L'imageur électronique peut comporter un écran du type LCD (« Liquid Crystal Display »), LED « Light Emitting Diode »), OLED (« Organic Light Emitting Diode »), laser, plasma, électrochrome, FED (« Field Emission Display »), SED (« Surface-conduction Electron-emitter Display »), LCOS (« Liquid Crystal On Silicon ») ou encore un tube cathodique.

L'image électronique comporte de préférence un écran à cristaux liquides (LCD).

L'écran peut présenter une résolution comprise entre 50 et 600 dpi, mieux entre 100 et 300 dpi, par exemple égale à 160 dpi.

La première image et/ou la deuxième image peuvent présenter des propriétés de polarisation.

Par exemple, la deuxième image peut être produite par l'imageur électronique au moyen d'une lumière polarisée, notamment une lumière polarisée rectilignement, circulairement ou elliptiquement. L'imageur électronique peut comporter un écran émettant une lumière polarisée ou projeter une lumière polarisée.

L'article de sécurité peut comporter un filtre polarisant. En particulier, la première image peut être réalisée à l'aide d'un filtre polarisant.

La première image peut être réalisée selon au moins l'une des étapes suivantes :
- réalisation d'une ou plusieurs perforations dans au moins un filtre polarisant pour former la première image,
- chauffage local d'au moins un filtre polarisant, par exemple à l'aide d'un laser, de façon à supprimer localement les propriétés polarisantes du filtre et à former la première image,
- application sélective, par exemple par impression et/ou collage, sur au moins un filtre polarisant, d'un matériau diffusant, par exemple une silice colloïdale et/ou une bande adhésive, pour former la première image,
- réalisation d'au moins une attaque sélective par réaction chimique et/ou par émission de rayonnement lumineux, notamment ultra-violet (UV) et/ou infrarouge (IR) et/ou laser, sur au moins un filtre polarisant, éventuellement à l'aide d'un masque, pour former la première image, de façon notamment à annuler localement l'effet polarisant du filtre,
- application, notamment par impression ou par couchage, d'au moins un effet polarisant, notamment d'un composé polarisant, par exemple à l'aide d'une encre comportant ledit composé polarisant, sur un substrat donné non polarisant, notamment sous forme de film polymère transparent ou translucide, pour former la première image,
- application, notamment par impression ou par couchage, d'au moins une composition comportant des cristaux liquides cholestériques, par exemple telle que celle commercialisée par la société SICPA sous la dénomination Oasis®, sur un substrat donné non polarisant, notamment un film polymère, pour former la première image.

A titre de remarque, selon l'effet désiré, les étapes énoncées précédemment seront réalisées de manière à former une image qui est l'image en positif ou en négatif de la première image.

En particulier, on peut appliquer localement sur au moins un filtre polarisant, par exemple par impression, un polyuréthane aliphatique base polyéther, par exemple tel que celui commercialisé par la société LAMBERTI sous la dénomination Esacote® PU 21/S.

Dans la dernière possibilité mentionnée ci-dessus, lorsque lors de la mise en oeuvre du procédé selon l'invention, la composition comportant des cristaux liquides cholestériques se situe entre le substrat polarisant et l'imageur électronique, les cristaux liquides cholestériques modifient la lumière polarisée de l'imageur électronique qui n'est pas arrêtée par le substrat et les zones recouvertes de cristaux liquides cholestériques apparaissent transparentes lorsque le substrat polarisant est orienté de façon à être opaque.

En revanche, lorsque le substrat polarisant se situe entre la composition comportant des cristaux liquides cholestériques et l'imageur électronique, les cristaux liquides cholestériques présentent un effet optiquement variable lorsque le substrat polarisant est orienté de façon à être opaque. L'effet optiquement variable des cristaux liquides cholestériques est plus généralement connu sous l'appellation d'effet « colorshift », la couleur des cristaux liquides cholestériques dépendant de l'angle d'observation et ceux-ci étant notamment observés sur un fond sombre, de préférence de couleur noire. L'effet « colorshift » des cristaux liquides cholestériques peut constituer une sécurisation supplémentaire pour authentifier et/ou identifier l'article de sécurité.

Ainsi, dans des exemples de mise en oeuvre particulièrement préférés du procédé selon l'invention, la première image est définie par un premier matériau polarisant superposé à un deuxième matériau polarisant, le premier matériau s'étendant notamment selon des motifs correspondant à la première image et le deuxième matériau s'étendant de façon continue. Le premier matériau est de préférence une impression de cristaux liquides cholestériques et le deuxième matériau est de préférence un substrat linéairement polarisant.

Par « motifs correspondants à la première image », on entend que lesdits motifs peuvent former la première image en négatif ou en positif.

Avantageusement, lorsque les première et deuxième images présentent des propriétés de polarisation, il n'existe qu'une seule orientation de l'une par rapport à l'autre permettant à l'une de masquer partiellement l'autre. Autrement dit, il n'existe qu'une seule orientation de la première image par rapport à la deuxième image permettant de ne pas pouvoir observer la deuxième image au travers des zones polarisantes de la première image, ou inversement. En effet, les première et deuxième images présentant des propriétés de polarisation sont constituées de zones polarisantes et de zones non polarisantes. Lorsqu'elles sont placées devant une source lumineuse émettant une lumière polarisée, il n'existe qu'une seule orientation selon laquelle les zones polarisantes deviennent opaques.

En particulier, il n'existe par exemple qu'une seule orientation de la première image dans le cas où l'article comporte un filtre polarisant par rapport à la deuxième image projetée ou affichée par l'imageur électronique au moyen d'une lumière polarisée, qui permette au filtre polarisant de masquer la lumière polarisée de l'imageur électronique. Le filtre polarisant peut n'apparaître opaque, notamment de couleur noire, que dans cette orientation, de préférence unique, de la première image par rapport à la deuxième image.

La présence d'une unique orientation des première et deuxième images l'une par rapport à l'autre telle que décrite ci-dessus peut par exemple permettre d'authentifier et/ou d'identifier l'article de sécurité selon un premier niveau de sécurité, notamment par la présence ou non d'une telle orientation permettant à une image de masquer l'autre.

Lorsque les première et deuxième images sont disposées selon ladite orientation, un changement de l'angle d'observation des première et deuxième images superposées peut permettre d'observer l'information d'authentification et/ou d'identification de l'article de sécurité.

Selon une variante de réalisation, la première image peut être imprimée avec un composé, notamment des cristaux liquides, visible uniquement lorsque placé devant un imageur électronique émettant une lumière polarisée, notamment un écran à cristaux liquides. Avantageusement, la première image est transparente sous illumination non polarisée, par exemple sous un éclairage naturel, et est visible uniquement sous illumination polarisée à l'aide de l'imageur électronique, ce qui apporte une sécurisation supplémentaire à l'article de sécurité.

L'imageur électronique, par exemple l'écran de l'imageur électronique, et/ou l'article de sécurité peut comporter un indicateur permettant de renseigner l'utilisateur sur la manière de positionner les première et deuxième images l'une par rapport à l'autre pour obtenir ladite orientation, par exemple un repère visuel.

L'imageur électronique, par exemple l'écran de l'imageur électronique, et/ou l'article de sécurité peut également comporter un repère permettant à un observateur de savoir comment observer les première et deuxième images superposées, en particulier sous quel(s) angle(s) les images doivent être observées pour observer l'information d'authentification et/ou d'identification.

L'article de sécurité peut comporter un microcircuit intégré, par exemple une puce RFID ou une puce optique (activée par exemple par la lumière issue de l'imageur électronique), apte à communiquer avec l'imageur électronique pour que celui-ci produise, notamment affiche et/ou projette, une information renseignant sur la manière de positionner les première et deuxième images l'une par rapport à l'autre pour obtenir ladite orientation, cette dernière caractéristique n'étant néanmoins pas revendiquée.

L'article de sécurité peut comporter un microcircuit intégré, par exemple une puce RFID ou une puce optique, apte à communiquer avec l'imageur électronique pour que celui-ci produise au moins une deuxième image dont l'association avec la première image peut permettre de mettre en oeuvre le procédé selon l'invention. En particulier, l'imageur électronique peut produire au moins une deuxième image associée à une première image de l'article de sécurité par communication entre l'imageur électronique et le microcircuit intégré.

L'imageur électronique peut détecter un changement d'orientation de l'article de sécurité relativement à l'imageur électronique. Ce changement d'orientation peut générer l'affichage ou la projection d'une nouvelle deuxième image différente ou dont l'orientation est modifiée. Par exemple, la nouvelle deuxième image peut être décalée comparativement à la deuxième image initiale de manière à ce que le changement d'orientation de l'article, entraînant par exemple un changement de l'angle d'observation des première et deuxième images superposées, n'engendre pas de modification dans l'observation. En particulier, l'information d'authentification et/ou d'identification peut correspondre à une observation constante, par exemple toujours la même image, en changeant l'orientation de l'article de sécurité relativement à l'imageur électronique, notamment par changement de l'angle d'observation.

L'imageur électronique peut encore produire au moins une deuxième image à partir d'une photo et/ou d'une vidéo de l'article de sécurité, notamment de la première image de l'article de sécurité ou d'un identifiant présent sur l'article, par exemple un logo ou un numéro de série. La photo et/ou vidéo peut être réalisée avec l'imageur électronique, un dispositif de capture d'image, par exemple une caméra numérique, connectée à l'imageur électronique par une liaison filaire ou non et/ou être transférée à l'imageur électronique, par exemple depuis un dispositif de stockage de données ou *via* un réseau, tel qu'Internet.

La deuxième image peut être produite uniquement à partir de la photo et/ou vidéo de l'article de sécurité, ou en variante, être produite à partir de la photo et/ou vidéo de l'article de sécurité et d'une information supplémentaire, par exemple une information présente sur l'article de sécurité, sur la photo et/ou vidéo, saisie par l'utilisateur, ou encore reçue d'un réseau, par exemple d'un serveur sécurisé.

L'imageur électronique peut par exemple comporter un programme permettant d'identifier l'article de sécurité, et notamment la première image, et de produire, notamment d'afficher et/ou de projeter, une deuxième image obtenue à partir d'une base de données renseignant sur la deuxième image à utiliser en fonction de l'article de sécurité, notamment de la première image.

L'imageur électronique peut produire plusieurs deuxièmes images et/ou l'article de sécurité peut comporter plusieurs premières images, au moins l'une des deuxièmes images permettant d'observer l'information d'authentification et/ou d'identification lorsque superposée à au moins l'une des premières images selon le procédé de l'invention, ou inversement.

En particulier, il peut ainsi être possible d'authentifier et/ou d'identifier l'article de sécurité avec différents types d'imageurs électroniques.

En variante, un imageur électronique donné peut permettre d'authentifier et/ou d'identifier des articles de sécurité de différents types, comportant notamment des premières images différentes.

Par exemple, les premières images peuvent se différencier par leur taille, leur couleur, leur forme, voire par l'espacement entre les points et/ou lignes de trame ou l'épaisseur des points et/ou lignes de trame, notamment dans le cas où les premières images sont des trames de révélation et/ou des images combinées telles que définies ci-après.

Les deuxièmes images peuvent également se différencier par leur taille, leur couleur, leur forme, voire par l'espacement entre les points et/ou lignes de trames ou l'épaisseur des points et/ou lignes de trames, notamment dans le cas où les deuxièmes images sont des trames de révélation et/ou des images combinées telles que définies ci-après, voire encore par la taille des pixels, l'espacement entre les pixels ou la couleur des pixels, notamment dans le cas où les deuxièmes images sont des trames formées par les pixels d'un écran comme décrit ci-après.

Les imageurs électroniques peuvent par exemple se différencier de par leur marque, leur modèle, leur résolution, leur type, à savoir écran d'ordinateur, de téléviseur ou de téléphone, ou projecteur, par exemple.

La présence de plusieurs premières images et/ou deuxièmes images peut permettre d'authentifier et/ou d'identifier l'article de sécurité indépendamment des différences mentionnées ci-dessus.

La deuxième image produite par l'imageur électronique peut par exemple provenir d'un réseau de communication avec lequel communique l'imageur électronique, par exemple un réseau de téléphonie, Internet ou un réseau interne, l'image étant par exemple téléchargée, et/ou être fournie avec l'imageur électronique, par exemple sur un support de données, par exemple un disque dur, une disquette, une clé USB, un CD et/ou un DVD. L'article de sécurité peut, le cas échéant, comporter un tel support de données. Le support de données peut par exemple être un microcircuit intégré, par exemple une puce RFID ou optique, communiquant avec l'imageur électronique.

La deuxième image peut être une image goniochromatique.

L'article de sécurité peut comporter une zone luminescente, par exemple fluorescente et/ou phosphorescente, et l'imageur électronique peut projeter la deuxième image sur l'article de sécurité sous éclairage ultraviolet (UV), le substrat étant situé entre la première image et la deuxième image.

En particulier, la première image peut être une impression luminescente, par exemple réalisée sur un fond opaque noir de l'article de sécurité, sur laquelle est projetée la deuxième image sous éclairage UV. La première image n'est alors visible que sous éclairage UV.

La première image peut encore être imprimée sur un fond luminescent de l'article de sécurité, de sorte qu'elle soit visible à la fois sous éclairage UV et éclairage normal.

La première image peut être dissimulée dans un motif de l'article de sécurité. Elle peut également être intégrée à un motif de l'article de sécurité ou encore constituer au moins une partie d'un motif de l'article de sécurité. A titre d'exemple, la première image constitue une partie des cheveux d'un personnage représenté sur un billet de banque.

La première image peut comporter une trame de révélation et la deuxième image peut comporter une image combinée comportant au moins deux images imbriquées, l'image combinée étant associée à la trame de révélation, ou inversement.

Par « associée », il faut comprendre que la trame de révélation est avantageusement adaptée à permettre de visualiser les différentes images imbriquées de l'image combinée.

L'homme du métier adaptera en particulier la résolution de l'imageur électronique et/ou la deuxième image, et la première image de façon à permettre la visualisation des différentes images imbriquées de l'image combinée.

De même que précédemment, la présence de plusieurs premières images peut permettre d'authentifier et/ou d'identifier l'article de sécurité indépendamment de l'imageur électronique utilisé et en particulier indépendamment de sa résolution.

La superposition au moins partielle des première et deuxième images peut permettre d'observer successivement les images imbriquées de l'image combinée par un changement de l'angle d'observation de la trame de révélation et de l'image combinée superposées. Il est alors possible d'authentifier et/ou d'identifier l'article de sécurité grâce à la restitution des images imbriquées qui constitue au moins en partie une information d'authentification et/ou d'identification de l'article.

La restitution des images imbriquées peut par exemple provoquer l'illusion d'un mouvement, notamment une animation.

L'imageur électronique peut comporter un écran, par exemple tels que ceux décrits précédemment, dont les pixels servent au moins partiellement à former une deuxième image sous la forme d'une trame de révélation. La première image comporte avantageusement une image combinée associée à la trame de révélation ainsi formée au moins partiellement par les pixels de l'écran.

En particulier, les lignes et/ou points de trame de la trame de révélation peuvent être formés par les pixels de l'écran de l'imageur électronique.

L'écran peut comporter des pixels formant au moins deux trames de révélation de résolutions différentes. En particulier, l'écran peut comporter deux trames de révélation avec des espacements entre points et/ou lignes de trame différents et/ou des épaisseurs de points et/ou de lignes de trame différentes.

La trame de révélation peut être formée par une succession de lignes multichrome formées par des pixels de l'écran, notamment des lignes comportant des pixels présentant trois cellules rouge, verte et bleue (du type RVB), les pixels étant espacés les uns des autres de manière à former des lignes monochromes dépourvues de pixels, notamment de couleur noire. Les pixels peuvent également présenter quatre cellules rouge, verte, bleue et jaune.

De la sorte, les pixels de l'écran peuvent permettre de former une trame de révélation intrinsèque de l'écran sans nécessiter l'affichage d'une image particulière sur l'écran. Par exemple, l'écran est illuminé de façon uniforme en blanc, par allumage des cellules rouges, vertes et bleues de tous les pixels de l'image.

L'imageur peut être utilisé de deux façons. Dans un premier cas, on affiche une image correspondant à un allumage non homogène des pixels de l'imageur. Dans un second cas, on allume de façon homogène tous les pixels de l'imageur et l'on exploite la trame native résultant de l'agencement des cellules des pixels au sein de l'imageur.

Ainsi, l'observation des images imbriquées par changement de l'angle d'observation de la première image sous forme d'image combinée et de la deuxième image sous forme de trame de révélation superposées peut permettre d'observer une animation monochrome des images imbriquées selon un changement d'angle d'observation selon une première direction, et une animation multichrome des images imbriquées selon un changement d'angle d'observation selon une deuxième direction. La deuxième direction est différente de la première, de préférence perpendiculaire.

L'image combinée, et les images imbriquées qu'elle comporte, peuvent être des images tramées, c'est-à-dire des images dont les différents niveaux de gradation sont obtenus par des points et/ou lignes de trame. Les images tramées peuvent par exemple être des images en demi-tons, permettant de rendre notamment des niveaux de couleur, par exemple de gris, à partir de regroupements de points de trame.

L'image combinée peut correspondre à la décomposition d'un mouvement d'un motif, par exemple d'un texte, de signes alphanumériques, d'idéogrammes, d'un objet, d'une personne et/ou d'un animal. Les images imbriquées peuvent représenter des positions successives et/ou mouvements successifs d'un motif, par exemple d'un objet, d'une personne et/ou d'un animal.

L'image combinée peut avantageusement être obtenue par la superposition des images imbriquées représentant chacune une position du motif.

Les images imbriquées peuvent représenter des informations cachées et révélées successivement par changement de l'angle d'observation de la trame de révélation et de l'image combinée superposées.

De préférence, l'image combinée conserve une esthétique reconnaissable, notamment de manière à constituer un premier élément d'authentification.

La trame de révélation peut permettre à l'oeil humain de visualiser une image imbriquée différente à la fois, le cerveau de l'observateur pouvant reconstituer par exemple un mouvement ou observer une information cachée.

Il faut donner aux expressions « image tramée » et « trame de révélation », au sens de la présente invention, un sens large qui couvre tous les types de trames ou pseudo-trames, comportant une juxtaposition de zones contrastant entre elles, par exemple de zones claires et de zones sombres, distinguables les unes des autres, la forme de ces zones claires et de ces zones sombres n'étant pas limitée à une forme particulière.

Par exemple, l'image combinée et/ou la trame de révélation peuvent comporter un ensemble de points et/ou de lignes parallèles ou non, dont la taille et/ou l'espacement entre eux sont variables ou constants, cet ensemble formant une succession de zones claires et sombres, par exemple blanches et noires.

En particulier, lorsque l'image combinée et/ou la trame de révélation comportent un ensemble de points disposés par exemple selon des lignes et/ou des colonnes, l'observation des images imbriquées peut se faire par changement de l'angle d'observation dans au moins deux directions. Il s'agit notamment d'une direction parallèle auxdites lignes et d'une direction parallèle auxdites colonnes.

L'image combinée et/ou la trame de révélation peuvent notamment comporter un ensemble de lignes, de préférence parallèles entre elles, d'épaisseur et d'espacement entre elles définis. En particulier, les lignes peuvent avoir la même épaisseur et/ou le même espacement entre elles.

L'image combinée et/ou la trame de révélation peuvent par exemple comporter une succession de lignes sombres et claires, par exemple noires et blanches. L'épaisseur des lignes sombres des images combinées est par exemple égale à l'épaisseur des lignes claires du moyen de révélation. L'épaisseur des lignes claires des images imbriquées est par exemple égale à l'épaisseur des lignes sombres du moyen de révélation.

La trame de révélation peut comporter des bandes opacifiantes à bords parallèles, éventuellement non rectilignes. La présence de bandes opacifiantes à bords non rectilignes peut rendre plus difficile la reproduction par un contrefacteur.

La trame de révélation peut comporter des portions de bandes, de couleur sensiblement identique ou identique à celle des bandes de l'image combinée, et disposées de manière à masquer certaines bandes de l'image combinée pour obtenir l'effet désiré.

De préférence, l'aire, notamment la longueur et/ou la largeur et/ou la plus grande dimension, de la trame de révélation peut être supérieure ou égale à l'aire, notamment la longueur et/ou la largeur et/ou la plus grande dimension, de l'image combinée. De la sorte, il est possible de visualiser la reconstitution entière du mouvement produit par le déplacement relatif entre l'image combinée et la trame de révélation.

La trame de révélation peut avoir une forme quelconque, par exemple circulaire, ovale, en étoile, polygonale, par exemple rectangulaire, carrée, hexagonale, pentagonale, en losange, entre autres.

L'article de sécurité peut comporter une première partie d'une trame de révélation ou d'une image combinée, l'imageur électronique comportant l'autre partie. L'article de sécurité et l'imageur optique peuvent alors être placés de sorte à réunir les deux parties de la trame de révélation ou de l'image combinée séparées pour la mise en oeuvre du procédé selon l'invention.

Selon une variante de l'invention, on peut associer deux images combinées de dimensions différentes. L'image combinée de plus petite dimension est en particulier répétée, notamment selon un réseau, notamment de lignes et de colonnes, afin d'apparaître comme un fond sur lequel est disposée l'image combinée de plus grande dimension. La trame de révélation associée comporte alors une première trame de révélation adaptée à l'image combinée de plus grande dimension, et une seconde trame de révélation adaptée à l'image combinée de plus petite dimension. Les deux images combinées différentes peuvent présenter des similarités et/ou se compléter. Elles peuvent en particulier être identiques et/ou symétriques.

La première image peut être portée sur l'article de sécurité par un procédé d'impression, par exemple offset, taille douce, laser, héliogravure, typographie ou sérigraphie.

Par exemple, la première image peut être imprimée, par exemple par des encres colorées ou non, visibles à l'oeil nu, sous lumière ultraviolette (UV) et/ou infrarouge (IR), opaques ou luminescentes, notamment fluorescentes, thermochromes, photochromes, à effet interférentiel, notamment iridescentes, ou à effet optiquement variable selon l'angle d'observation (goniochromatiques), notamment comportant des cristaux liquides, des encres métalliques ou non, magnétiques ou non, entre autres.

La première image peut encore comporter des métallisations et/ou démétallisations, par exemple en aluminium. Avantageusement, des métallisations et/ou des démétallisations peuvent être utilisées afin d'éviter la contrefaçon par impression. En particulier, des métallisations et/ou démétallisations de couleurs différentes sont préférentiellement utilisées, par exemple au moyen d'aluminium et de cuivre.

La première image peut comporter un filigrane ou pseudo-filigrane.

Les filigranes sont produits par des techniques bien connues dans le domaine papetier. Les pseudo-filigranes reproduisent l'apparence d'un filigrane en présentant des différences d'opacité, ils peuvent être obtenus mécaniquement par apport de pression avec ou sans apport de chaleur et/ou chimiquement par application d'une composition, par exemple en augmentant localement la transparence du papier grâce à des substances transparentisantes. La densité de matière fibreuse du pseudo-filigrane peut être uniforme à la différence d'un filigrane conventionnel.

Les première et deuxième images peuvent être colorées, et notamment de couleurs différentes.

La première image peut être portée par un patch et/ou un foil comportant le substrat, figurant sur l'article de sécurité.

Le patch et/ou le foil peuvent comporter des métallisations et/ou des démétallisations, par exemple en aluminium, ou tout type d'impression.

Le patch et/ou le foil peuvent comporter des impressions holographiques et/ou des cristaux liquides.

La première image peut encore être portée par un fil de sécurité comportant le substrat, incorporé en surface, en masse ou en fenêtre(s) dans l'article de sécurité.

Le fil de sécurité peut présenter une largeur suffisante pour permettre d'y faire figurer la première image en totalité. La largeur du fil de sécurité est par exemple comprise entre 3 et 20 mm, et de préférence encore entre 4 et 10 mm.

L'article de sécurité, ainsi que les éléments qu'il comporte, comme par exemple la première image, une fenêtre, un fil de sécurité, un patch et/ou un foil comportant ou non la première image, peuvent comporter un ou plusieurs éléments de sécurité additionnels tels que définis ci-après.

Parmi les éléments de sécurité additionnels, certains sont détectables à l'oeil, en lumière du jour ou en lumière artificielle, sans utilisation d'un appareil particulier. Ces éléments de sécurité comportent par exemple des fibres ou planchettes colorées, des fils imprimés ou métallisés totalement ou partiellement. Ces éléments de sécurité sont dits de premier niveau.

D'autres types d'éléments de sécurité additionnels sont détectables seulement à l'aide d'un appareil relativement simple, tel qu'une lampe émettant dans l'ultra-violet (UV) ou l'infra-rouge (IR). Ces éléments de sécurité comportent par exemple des fibres, des planchettes, des bandes, des fils ou des particules. Ces éléments de sécurité peuvent être visibles à l'oeil nu ou non, étant par exemple luminescents sous un éclairage d'une lampe de Wood émettant à une longueur d'onde de 365 nm. Ces éléments de sécurité sont dits de deuxième niveau.

D'autres types d'éléments de sécurité additionnels nécessitent pour leur détection un appareil de détection plus sophistiqué. Ces éléments de sécurité sont par exemple capables de générer un signal spécifique lorsqu'ils sont soumis, de manière simultanée ou non, à une ou plusieurs sources d'excitation extérieure. La détection automatique du signal permet d'authentifier, le cas échéant, l'article. Ces éléments de sécurité comportent par exemple des traceurs se présentant sous la forme de matières actives, de particules ou de fibres, capables de générer un signal spécifique lorsque ces traceurs sont soumis à une excitation optronique, électrique, magnétique ou électromagnétique. Ces éléments de sécurité sont dits de troisième niveau.

L'article de sécurité et les éléments qu'il comporte, peuvent présenter des caractéristiques de sécurité de premier, de deuxième ou de troisième niveau.

En particulier, la première image peut être associée à des effets de métallisation, de luminescence, par exemple fluorescence et/ou phosphorescence, thermochromiques (encre thermochromique par exemple), magnétiques, polarisant (encre à cristaux liquides par exemple), cette liste étant non limitative.

L'article de sécurité peut être un moyen de paiement, tel qu'un billet de banque, un chèque ou un ticket restaurant, un article d'identité tel qu'une carte d'identité, un visa, un passeport ou un permis de conduire, un ticket de loterie, un titre de transport ou un ticket d'entrée à des manifestations culturelles ou sportives, ou encore une carte d'accès, par exemple pour des zones dont l'accès est restreint.

En particulier, l'article de sécurité peut être une carte d'accès, cette caractéristique n'étant néanmoins pas revendiquée, comportant une première image, par exemple sous forme d'image combinée, que le porteur de la carte présente à un point de contrôle d'accès, par exemple d'une entreprise, où le procédé d'authentification et/ou d'identification tel que défini précédemment est mis en oeuvre, par exemple à l'aide d'une deuxième image sous forme de trame de révélation, pour autoriser l'accès.

Selon un autre aspect, non revendiqué en tant que tel, un procédé d'authentification et/ou d'identification d'un article de sécurité, notamment un document de sécurité, comportant une première image et un microcircuit intégré, notamment une puce RFID ou une puce optique, comporte les étapes consistant à :
- superposer au moins partiellement la première image de l'article avec une deuxième image produite par un imageur électronique suite à une communication entre le microcircuit intégré et l'imageur électronique,
- observer une information d'authentification et/ou d'identification de l'article de sécurité, notamment par mouvement relatif entre les première et deuxième images et/ou par changement de l'angle d'observation des première et deuxième images au moins partiellement superposées.

Selon encore un autre aspect, non revendiqué en tant que tel, un procédé d'authentification et/ou d'identification d'un article de sécurité, notamment un document de sécurité, comportant une première image, comporte les étapes consistant à :
- superposer au moins partiellement la première image de l'article avec une deuxième image produite par un imageur électronique à partir d'une photo et/ou vidéo de l'article de sécurité, notamment de la première image,
- observer une information d'authentification et/ou d'identification de l'article de sécurité, notamment par mouvement relatif entre les première et deuxième images et/ou par changement de l'angle d'observation des première et deuxième images au moins partiellement superposées.

La photo et/ou vidéo peut être réalisée avec l'imageur électronique, un dispositif de capture d'image, par exemple une caméra numérique, connectée à l'imageur électronique et/ou être transférée à l'imageur électronique, par exemple depuis un dispositif de stockage de données ou *via* un réseau, tel qu'Internet.

L'article de sécurité peut comporter un substrat transparent ou translucide, et la première image peut être située du côté d'une première face du substrat. La deuxième image peut être superposée au moins partiellement à la première image, le substrat étant situé entre les première et deuxième images.

L'invention a encore pour objet, selon un autre de ses aspects, un article de sécurité selon la revendication 14.

Le premier matériau polarisant peut être superposé à un deuxième matériau polarisant, le premier matériau étant de préférence une impression de cristaux liquides cholestériques et le deuxième matériau étant de préférence un substrat linéairement polarisant.

La première image peut être définie par un substrat polarisant rendu localement non polarisé de manière à former la première image.

La première image peut être définie par une impression d'une encre polarisante.

L'article peut comporter plusieurs premières images différentes, chaque première image étant superposable à au moins une deuxième image produite par un imageur électronique adapté à cette première image, les imageurs électroniques ayant notamment des résolutions différentes.

Selon un autre aspect, non revendiqué en tant que tel, un article de sécurité, notamment pour la mise en oeuvre du procédé tel que décrit précédemment, comporte plusieurs premières images différentes, chaque première image étant superposable à au moins une deuxième image produite par un imageur électronique adapté à cette première image, les imageurs électroniques ayant notamment des résolutions différentes.

L'article de sécurité peut être utilisé dans le procédé tel que décrit précédemment. Les caractéristiques décrites en relation avec le procédé selon l'invention peuvent s'appliquer à l'article de sécurité.

Selon un autre aspect, ne faisant pas partie de l'invention telle que revendiquée, un procédé de fabrication d'une première image d'un article tel que défini précédemment, comprend les étapes suivantes :
- on dépose une couche métallique sur un substrat au moins partiellement transparent,
- on applique, notamment par impression, couchage ou dépôt, une encre ou un vernis sur la couche métallique, cette encre ou ce vernis pouvant être coloré(e) ou mat(e), de sorte à former la première image,
- on procède à une démétallisation sélective dans la ou les zones non recouvertes par l'encre ou le vernis.

Le choix de l'encre ou du vernis peut être fait de sorte à être compatible avec un procédé de démétallisation.

Le procédé de démétallisation peut par exemple correspondre à un procédé chimique à la soude permettant d'enlever la ou les zones où le métal est non recouvert par l'encre ou le vernis.

Le procédé de démétallisation peut encore comporter l'application d'un vernis ou encre, pouvant être mat(e) ou coloré(e), ayant des propriétés optiques différentes de celles de la couche métallique.

L'encre peut être choisie parmi des encres colorées ou non, visibles à l'oeil nu, sous lumière UV et/ou IR, opaques ou luminescentes, notamment fluorescentes, thermochromes, photochromes, à effet interférentiel, notamment iridescentes, ou à effet optiquement variable selon l'angle d'observation (goniochromatiques), notamment comportant des cristaux liquides, des encres métalliques ou non, magnétiques ou non, entre autres. De préférence, l'encre est fluorescente et/ou phosphorescente sous lumière UV et/ou IR.

L'article peut comporter des éléments de sécurité de premier niveau et/ou de deuxième niveau, tels que décrits précédemment. En particulier, l'article peut comporter des éléments de sécurité sous forme d'impressions et/ou de marqueurs, notamment thermochromes et/ou photochromes.

Grâce à ce procédé de fabrication, on peut observer sur une première face de l'article une première image métallique brillante et sur la deuxième face opposée de l'article une première image ayant l'aspect de l'encre ou du vernis, par exemple colorée ou mate.

L'invention pourra être mieux comprise à la lecture qui va suivre, de la description d'exemples non limitatifs de mise en oeuvre de celle-ci et à l'examen des figures du dessin, schématiques et partielles, sur lequel :
- la figure 1 représente un schéma en blocs d'étapes mises en oeuvre dans un exemple de procédé selon l'invention,
- la figure la illustre, en coupe, le changement d'angle d'observation mis en oeuvre dans le procédé selon l'invention permettant d'observer une information d'authentification et/ou d'identification d'un article de sécurité,
- les figures 2 à 4 représentent des exemples d'associations d'articles de sécurité et d'imageurs électroniques pour la mise en oeuvre d'un exemple du procédé selon l'invention,
- la figure 5 représente un exemple d'imageur électronique affichant des indicateurs,
- la figure 6 représente un exemple d'article de sécurité comportant un élément de sécurité et un microcircuit intégré,
- la figure 7 représente une série d'images imbriquées permettant de créer une image combinée,
- la figure 8 représente une image combinée obtenue à partir de la série d'images imbriquées de la figure 7,
- la figure 9 représente un exemple de trame de révélation pouvant être associé à l'image combinée de la figure 8,
- les figures 10 à 14 représentent des exemples de réalisation d'articles de sécurité comportant une première image sous la forme d'une image combinée ou d'une trame de révélation,
- la figure 15 représente un exemple de première image ou deuxième image comportant deux images combinées différentes pour la mise en oeuvre d'un exemple du procédé selon l'invention,
- la figure 16 représente un exemple de première image ou deuxième image comportant une trame de révélation pour la mise en oeuvre d'un exemple du procédé selon l'invention, associée aux images combinées de la figure 15,
- les figures 17 et 18 représentent respectivement des exemples de première image et de deuxième image, comprenant chacune à la fois une trame de révélation et une image combinée,
- les figures 19 à 21 illustrent un exemple de mise en oeuvre du procédé selon l'invention, l'article de sécurité comportant une première image sous forme de trame de révélation et l'imageur électronique produisant une deuxième image sous forme d'image combinée,
- les figures 22 et 23 illustrent un autre exemple de mise en oeuvre du procédé selon l'invention, l'article de sécurité comportant une première image sous forme d'image combinée et l'imageur électronique produisant une deuxième image sous forme de trame de révélation,
- les figures 24 à 26 illustrent un autre exemple de mise en oeuvre du procédé selon l'invention, et
- les figures 27 à 30 illustrent d'autres exemples de mise en oeuvre du procédé selon l'invention.

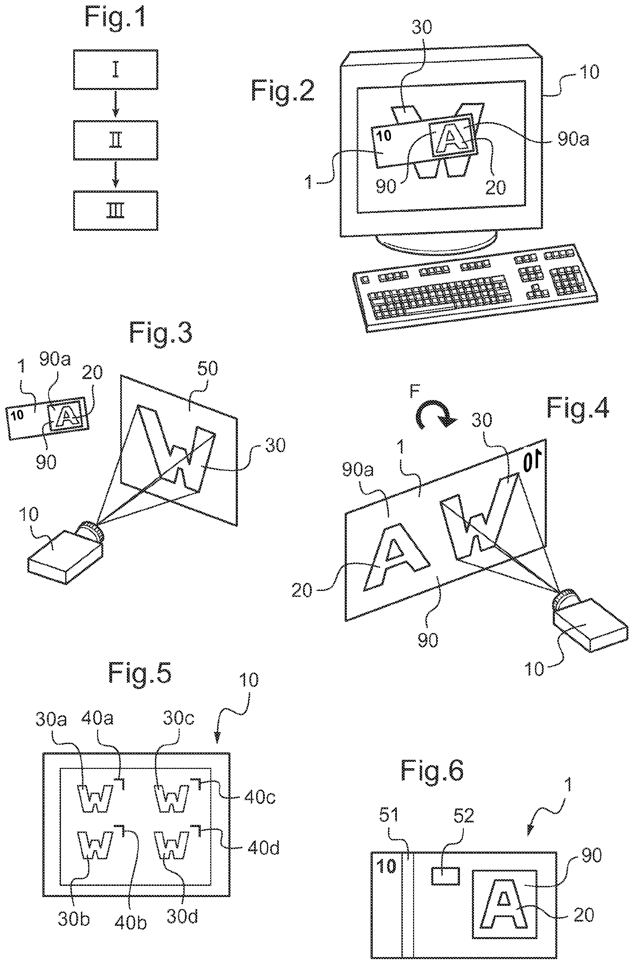

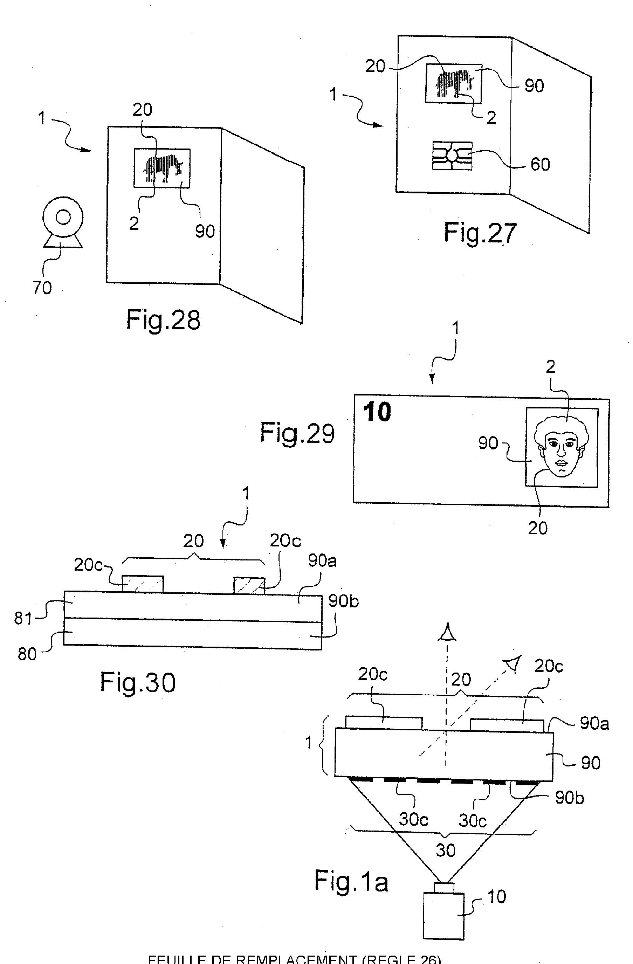

On a représenté sur la figure 1 un schéma en blocs relatif à des étapes mises en oeuvre dans un exemple de procédé selon l'invention.

Dans une première étape I, on superpose au moins partiellement une première image de l'article de sécurité avec une deuxième image produite par un imageur électronique, le substrat étant situé entre la deuxième image et la première image.

Dans une deuxième étape II, l'utilisateur se déplace relativement aux première et deuxième images superposées.

Dans une troisième étape III, de préférence concomitante à la deuxième étape II, l'utilisateur observe l'information d'authentification et/ou d'identification de l'article de sécurité, qui apparaît lors du changement d'angle d'observation des première et deuxième images superposées.

Les trois étapes I, II et III peuvent être réalisées simultanément ou non.

On a illustré sur la figure 1a, en coupe, la superposition de la deuxième image 30 sur la première image 20, comportant une pluralité de motifs 20c, du côté de la deuxième face 90b du substrat 90, opposée à la première face 90a du substrat 90 sur laquelle figure la première image 20.

La deuxième image 30, comportant une pluralité de motifs 30c, peut par exemple être projetée sur la deuxième face 90b du substrat 90, ou affichée par l'imageur électronique 10, l'observateur superposant alors la première image 20 à la deuxième image 30 en ayant la première face 90a du substrat 90 face à lui.

Puis, l'observateur change l'angle d'observation des première 20 et deuxième 30 images superposées de manière à observer une information d'authentification et/ou d'identification, par exemple la restitution d'images imbriquées dans le cas où les première et deuxième images correspondent à une trame de révélation et à une image combinée.

On a représenté sur les figures 2 à 4 des exemples d'association entre un article de sécurité 1 et un imageur électronique 10 permettant de mettre en oeuvre un tel procédé.

Sur la figure 2, l'imageur électronique 10 est par exemple un écran d'ordinateur sur lequel est affichée une deuxième image 30.

L'article de sécurité 1 est par exemple sous la forme d'un billet de banque et comporte une première image 20 réalisée sur un substrat 90 transparent ou translucide de l'article de sécurité. Le substrat 90 peut être situé localement sur l'article de sécurité 1, comme par exemple représenté sur les figures 2 et 3, ou bien encore s'étendre d'un bord à l'autre de l'article de sécurité 1, comme par exemple représenté sur la figure 4.

L'article de sécurité 1 est placé sur l'écran de l'imageur électronique 10 de manière à superposer au moins partiellement la première image 20 à la deuxième image 30, la première face 90a du substrat 90 faisant face à l'observateur, puis l'observateur se déplace relativement à l'article de sécurité 1 et à l'écran de l'imageur électronique 10 pour observer une information d'authentification et/ou d'identification de l'article de sécurité 1, conformément aux étapes décrites à la figure 1.

Sur la figure 3, l'imageur électronique 10 est par exemple sous la forme d'un projecteur numérique, projetant une deuxième image 30 sur un fond 50, par exemple le mur d'une pièce.

L'article de sécurité 1 comportant la première image 20 peut alors être superposé au moins partiellement à la deuxième image 30 projetée sur le fond 50, la première face 90a du substrat 90 faisant face à l'observateur, celui-ci étant placé derrière le fond 50 du côté opposé au côté où la deuxième image 30 est projetée, de manière à mettre en oeuvre les étapes décrites en référence à la figure 1.

Sur la figure 4, l'imageur électronique 10 est un projecteur qui projette la deuxième image 30 directement sur l'article de sécurité 1 comportant un substrat 90 transparent ou translucide s'étendant sur toute la surface de l'article de sécurité 1.

La deuxième image 30 peut, comme dans l'exemple de la figure 4, être projetée, par exemple sous forme de « W », sur une zone de l'article de sécurité 1 où n'est pas présente la première image 20. Puis, l'article de sécurité 1 peut par exemple être plié sur lui-même, selon le sens de la flèche F, de manière à superposer la première image 20, par exemple sous forme de « A », à la deuxième image 30 projetée par l'imageur électronique 10, le substrat 90 étant alors situé entre les première 20 et deuxième 30 images, pour mettre en oeuvre les étapes décrites à la figure 1. La partie de l'article de sécurité 1 comportant la première image 20 peut ainsi être rabattue sur la partie comportant la deuxième image 30, cette partie restant immobile, de manière à ce que la deuxième image 30 se situe entre l'imageur 10 et la première image 20. En particulier, lors de l'observation, l'article de sécurité 1 replié sur lui-même reste immobile et la distance entre l'article et l'imageur électronique 10 est inchangée, l'observateur pouvant par exemple se déplacer relativement à l'article de sécurité 1.

Dans une variante, non représentée, la deuxième image 30 est projetée du côté de la deuxième face 90b du substrat 90 directement en superposition de la première image 20 de l'article 1.

On a représenté à la figure 5 une variante de réalisation dans laquelle l'imageur électronique 10 est un écran affichant plusieurs deuxièmes images 30a, 30b, 30c et 30d.

Les deuxièmes images 30a à 30d peuvent avoir des propriétés différentes, par exemple des formes, des couleurs, des dimensions, des points ou lignes de trame différentes.

Avantageusement, les deuxièmes images 30a à 30d se différencient de manière à permettre à l'une d'entre elles au moins d'être associée à au moins une première image 20 présente sur un article de sécurité 1. De la sorte, il est par exemple possible d'authentifier et/ou identifier une plus grande diversité d'articles de sécurité 1 ayant des premières images respectives différentes, correspondant aux différentes deuxièmes images 30a à 30d.

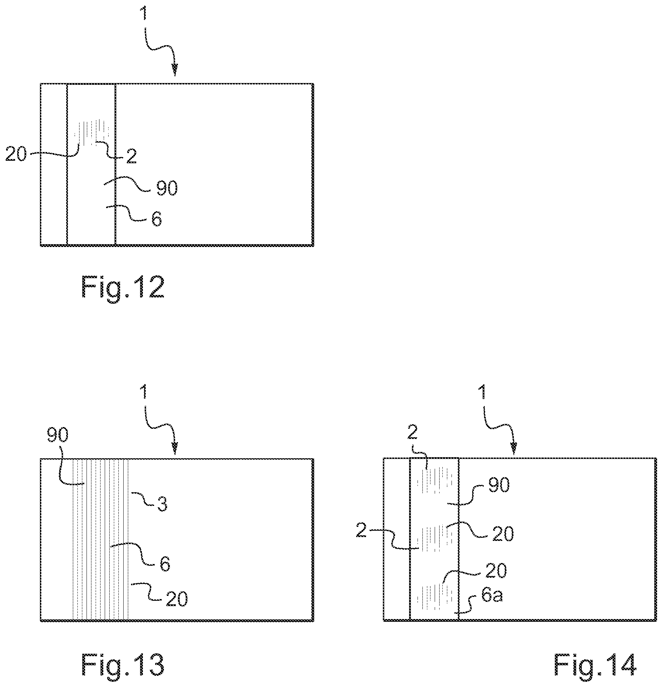

En variante, l'article de sécurité 1 comporte plusieurs premières images 20 différentes, comme on peut le voir par exemple sur la figure 14, et l'imageur électronique 10 produit une ou plusieurs deuxièmes images 30. De la sorte, il est par exemple possible d'authentifier et/ou d'identifier un article de sécurité 1 donné sur une plus grande diversité d'imageurs électroniques différents, et notamment avec des imageurs électroniques ayant des résolutions différentes. De la sorte, les deux avantages précédemment décrits peuvent être réunis.

L'imageur électronique 10 peut afficher un ou plusieurs indicateurs 40a, 40b, 40c et 40d permettant de renseigner l'utilisateur sur la manière de positionner l'article de sécurité 1 par rapport à l'imageur.

En particulier, les indicateurs 40a à 40d peuvent permettre de savoir où positionner le coin supérieur droit de l'article de sécurité 1, de manière à superposer correctement une première image 20 d'un article de sécurité 1 à une deuxième image 40a, 40b, 40c ou 40d affichée sur l'écran de l'imageur électronique 10.

On a illustré à la figure 6 la possibilité pour l'article de sécurité 1 de comporter un élément de sécurité additionnel 51 de tout type connu, par exemple l'un de ceux décrits précédemment, par exemple un fil de sécurité luminescent.

En outre, l'article de sécurité 1 peut comporter un microcircuit intégré 52, par exemple une puce RFID ou optique, permettant de communiquer avec l'imageur électronique 10 afin de commander l'affichage d'un indicateur tel que décrit précédemment ou de diffuser une information sur la manière de positionner les première et deuxième images.

Notamment dans les exemples décrits précédemment, la première image 20 peut comporter une trame de révélation 3 et la deuxième image 30 peut comporter une image combinée 2 comportant au moins deux images imbriquées 2a, l'image combinée 2 étant associée à la trame de révélation 3, ou inversement, comme mentionné plus haut.

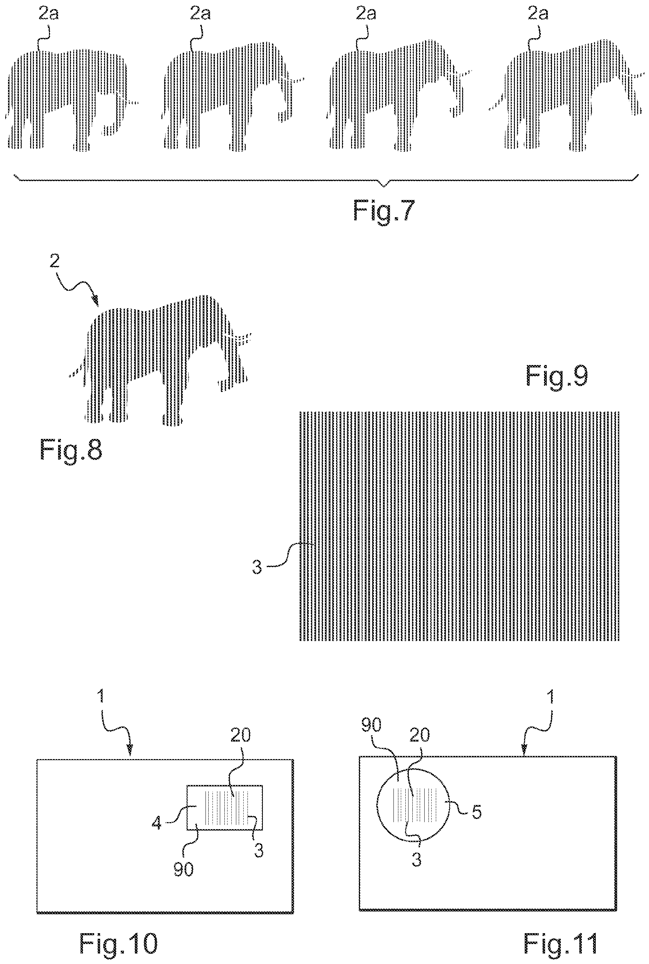

Les figures 7 à 26 suivantes illustrent cette possibilité.

On a représenté sur la figure 7 une série d'images imbriquées 2a permettant de créer une image combinée 2, visible sur la figure 8, représentant dans cet exemple un motif sous la forme d'un éléphant.

Les images imbriquées 2a correspondent par exemple à quatre positions différentes de l'éléphant et permettent ainsi de créer une décomposition du mouvement de l'éléphant.

Chaque image imbriquée 2a peut comporter comme illustré un ensemble de lignes parallèles, espacées entre elles de manière régulière ou non, et présentant des épaisseurs variables.

Les images 2a sont superposées les unes sur les autres de manière à former un motif combiné qui correspond à l'image combinée 2.

On a représenté sur la figure 9 un exemple de trame de révélation 3 pouvant être associée à l'image combinée 2 de la figure 8.

La trame de révélation 3 est par exemple de forme rectangulaire et comporte un ensemble de lignes parallèles, espacées entre elles de façon régulière ou non, et ayant des épaisseurs variables.

La trame de révélation 3 présente une aire, une longueur et une largeur, supérieures à celles de l'image combinée 2 permettant ainsi de visualiser plus facilement la totalité des mouvements de l'éléphant lors du déplacement relatif entre l'image combinée 2 et la trame de révélation 3.

Dans cet exemple, l'image combinée 2 et la trame de révélation 3 comportent des ensembles de lignes alternativement sombres et claires, notamment noires et blanches, mais il pourrait en être autrement. Par exemple, les lignes peuvent être colorées et être différentes pour l'image combinée 2 et pour la trame de révélation 3.

On a représenté sur les figures 10 à 14 des exemples de réalisation d'article de sécurité 1 pour la mise en oeuvre du procédé selon l'invention.

Sur la figure 10, l'article 1 comporte une fenêtre 4, dans laquelle figurent le substrat 90 transparent ou translucide et la première image 20 sous forme de trame de révélation 3. La première image 20 peut par exemple être formées par impression, notamment taille douce, métallisation ou démétallisation.

Sur la figure 11, l'article de sécurité 1 comporte un patch 5 comportant un substrat 90 transparent ou translucide et sur lequel figure la première image 20 sous forme de trame de révélation 3, le patch 5 comportant par exemple des impressions holographiques.

La trame de révélation 3 peut comporter des impressions holographiques et/ou des métallisations et/ou démétallisations.

Sur la figure 12, l'article de sécurité 1 comporte un fil de sécurité 6 comportant un substrat 90 transparent ou translucide et sur lequel figure la première image 20 sous forme d'image combinée 2.

Sur la figure 13, l'article de sécurité 1 comporte un fil de sécurité 6 sur lequel figure la première image 20 sous forme de trame de révélation 3.

Le fil de sécurité 6 comporte un substrat 90 transparent ou translucide. La trame de révélation 3 peut s'étendre d'un bord de l'article de sécurité 1 au bord opposé.

Sur la figure 14, l'article de sécurité 1 comporte un fil de sécurité 6 comportant plusieurs premières images 20 sous forme d'images combinées 2. Les premières images 20 sont réalisées de manière à ce que l'article de sécurité 1 puisse être utilisé avec des imageurs électroniques différents, présentant notamment des résolutions différentes, chaque première image 20 étant adapté à une résolution donnée d'un imageur électronique.

Le fil de sécurité 6 comporte de plus un substrat 90 transparent ou translucide sur toute sa surface.

La présence de plusieurs premières images 20 sur l'article de sécurité 1 disposées sur un fil de sécurité 6 peut permettre de simplifier le procédé de fabrication de l'article de sécurité 1 par incorporation du fil de sécurité 6 dans un substrat, notamment fibreux. Une incorporation au repère peut en particulier ne pas être nécessaire.

Dans tous les exemples précédemment décrits, les images combinées 2 et les trames de révélation 3 peuvent être interverties.

Le fil de sécurité 6 peut être introduit dans l'article de sécurité 1 de façon conventionnelle, par exemple en surface, en masse ou en fenêtre(s).

Les images combinées 2 et/ou les trames de révélation 3 peuvent en outre comporter un filtre polarisant. L'article de sécurité 1 peut alors être authentifié et/ou identifié au moyen d'un imageur électronique 10 émettant une lumière polarisée.

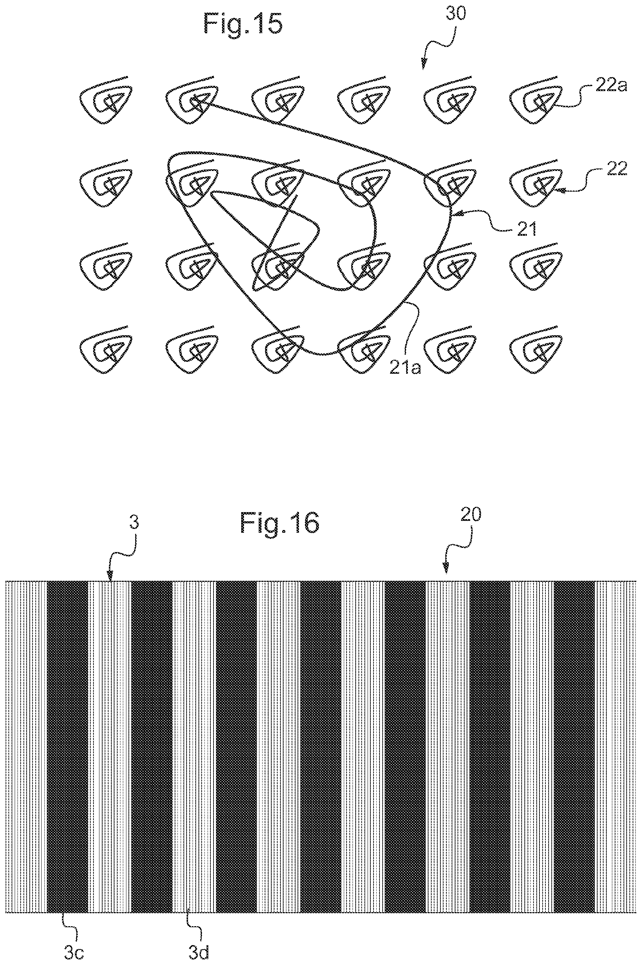

Sur la figure 15 est représentée de façon schématique une deuxième image 30 (ou une première image) comportant deux images combinées différentes 21 et 22. La seconde image combinée 22 est par exemple une image symétrique de la première image combinée 21 après modification éventuelle de sa taille, afin d'obtenir un réseau d'images combinées 22 organisé en rangées et colonnes.

La figure 16 représente la première image 20 (respectivement la deuxième image) correspondante, sous forme de trame de révélation 3 des images imbriquées 21a et 22a représentées schématiquement sur la figure 16. Cette trame de révélation 3 comporte l'association de deux trames élémentaires 3c et 3d permettant d'observer respectivement les images imbriquées 21a et 22a. La trame 3c comporte par exemple une succession de bandes noires alternant avec des bandes de la trame 3d constituées par une alternance de lignes blanches et noires, avec un pas plus faible.

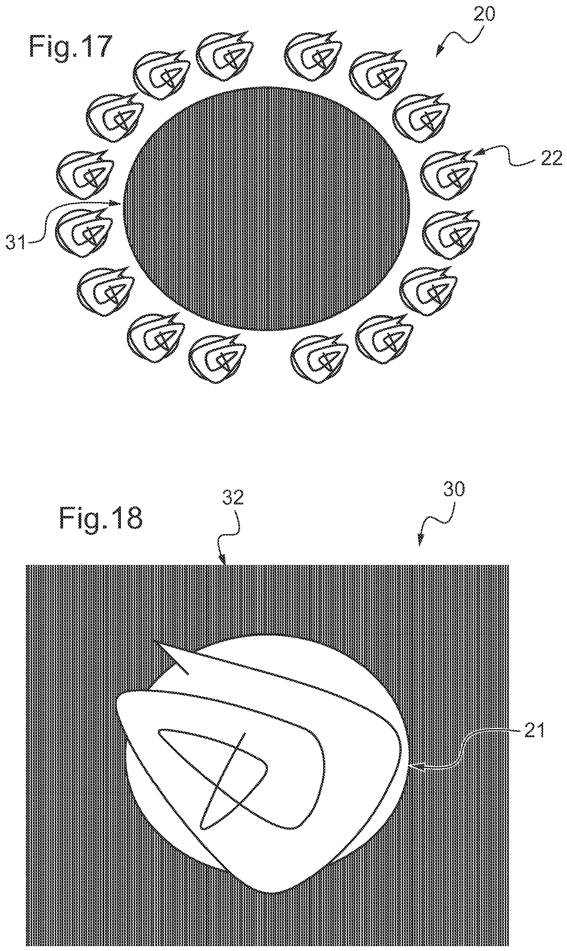

Sur la figure 17 est représentée de façon schématique une première image 20 (ou deuxième image) sous forme d'image combinée 22 disposée selon un réseau d'images combinées 22 autour d'une trame de révélation 31.

Sur la figure 18 est représentée de façon schématique la deuxième image 30 (respectivement la première image) sous forme d'image combinée 21 entourée d'une trame de révélation 32.

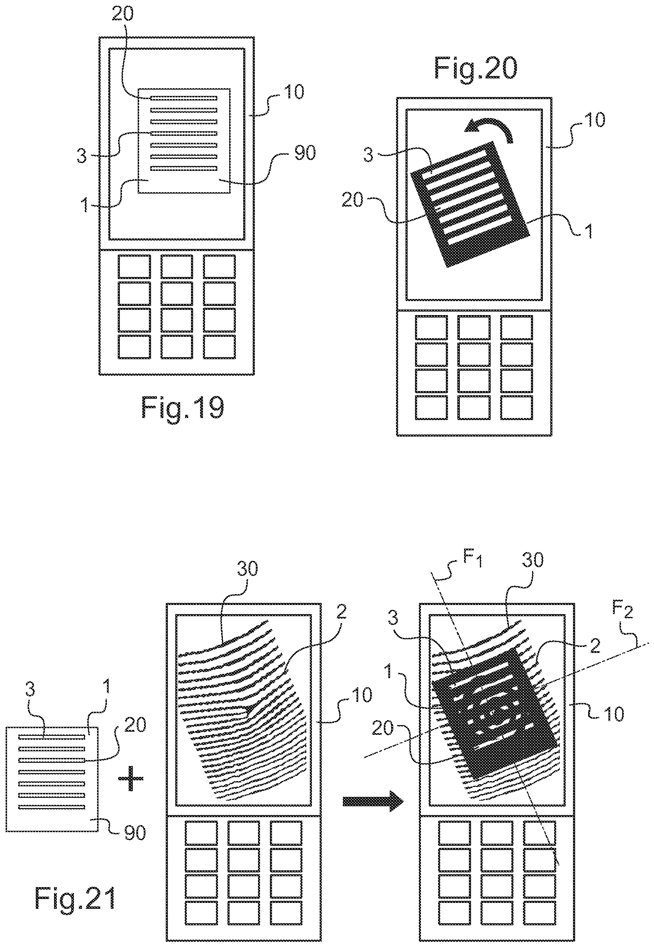

On a illustré sur les figures 19 à 21 un exemple de mise en oeuvre d'un procédé selon l'invention.

Dans cet exemple, l'imageur électronique 10 se présente par exemple sous la forme d'un téléphone portable sur lequel est affichée une deuxième image 30 sous forme d'image combinée 2 (visible sur la figure 21).

En outre, l'article de sécurité 1 comporte un filtre polarisant comportant un substrat 90 transparent et translucide, et sur lequel a été formée la première image 20 sous forme de trame de révélation 3.

La figure 20 illustre la superposition de l'article de sécurité 1 comportant la première image 20 sous forme de trame de révélation 3 à la deuxième image 30 sous forme d'image combinée 2 produite par l'imageur électronique 10, celui-ci émettant une lumière polarisée.

L'utilisateur déplace l'article de sécurité 1 afin de l'amener dans une orientation croisée permettant d'observer l'opacité du filtre polarisant vis-à-vis de la lumière polarisée.

Puis, comme on peut le voir sur la figure 21, l'oeil de l'observateur se déplace relativement au plan formé par les axes F₁ et F₂ de façon à changer l'angle d'observation des première et deuxième images superposées et à observer l'animation des images imbriquées. Le déplacement de l'utilisateur a lieu en conservant l'orientation relative de la trame par rapport à l'écran.

Un tel procédé permet d'authentifier et/ou d'identifier l'article de sécurité 1 selon plusieurs niveaux de sécurité.

Le positionnement de la trame de révélation 3 comportant le filtre polarisant selon l'orientation permettant d'observer l'opacité du filtre polarisant, cette observation n'étant visible que sur un écran émettant une lumière polarisée, par exemple un écran du type LCD, procure un premier niveau de sécurité.

La révélation de l'animation des images imbriquées par changement de l'angle d'observation de la trame de révélation 3 et de l'image combinée 2 procure un deuxième niveau de sécurité.

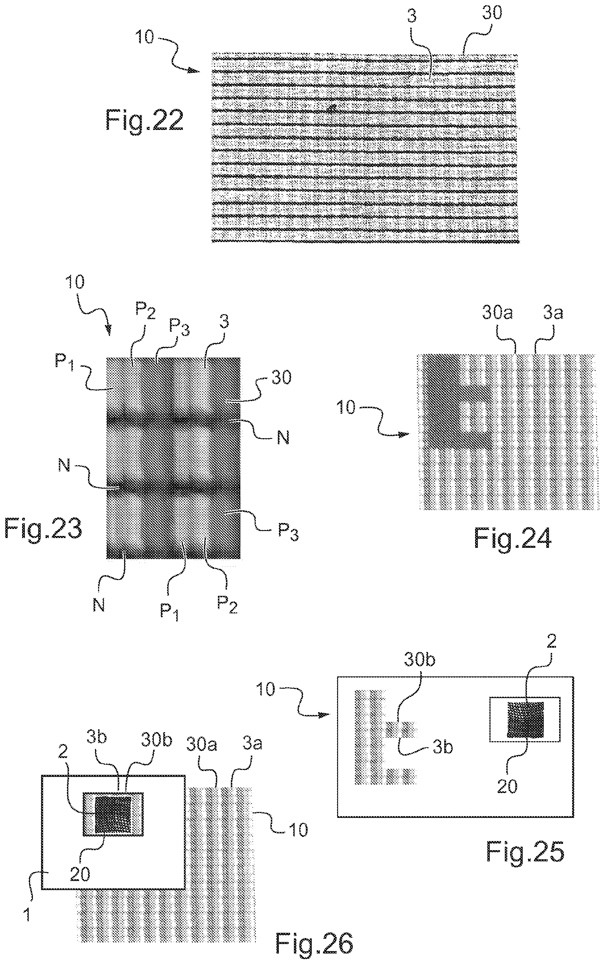

On a représenté sur les figures 22 et 23 un autre exemple de mise en oeuvre du procédé selon l'invention.

Dans cet exemple, l'imageur électronique 10 est de préférence un écran, notamment du type LCD, comportant une pluralité de pixels.

La figure 22 représente partiellement l'imageur électronique 10 sous forme d'écran LCD comportant une pluralité de pixels, et la figure 23 représente une partie de la figure 22 agrandie.

L'ensemble des pixels de l'écran forme la deuxième image 30 sous forme de trame de révélation 3.

Comme on peut le voir sur la figure 23, l'écran peut comporter un arrangement régulier de pixels disposés sous forme de lignes horizontales et verticales. En particulier, les lignes horizontales peuvent comporter une répétition de trois pixels P₁, P₂, et P₃, de couleurs différentes, par exemple RVB.

En outre, comme on peut le voir sur la figure 23, les lignes horizontales de pixels peuvent être séparées par des zones N de couleur noire dépourvues de pixels.

De cette façon, lorsque l'image combinée 2 de l'article de sécurité 1 est superposée à l'écran de l'imageur électronique 10 comportant la trame de révélation 3, un changement d'angle d'observation dans le sens horizontal peut faire apparaître une animation multichrome permettant d'observer des images imbriquées, et après avoir appliqué une rotation de 90° à l'image combinée 2, un changement d'angle d'observation dans le sens vertical peut permettre de faire apparaître une animation monochrome permettant d'observer d'autres images imbriquées.

Selon une variante, l'image combinée 2 et la trame de révélation 3 sont réalisées de manière à permettre l'observation d'une animation par un changement d'angle d'observation selon deux directions différentes, notamment perpendiculaires. Un tel effet est par exemple obtenu au moyen d'une trame de révélation 3 constituée de rangées et de colonnes de points, par exemple de forme carrée, et d'une image combinée 2 adaptée, comme celle représentée sur la figure 25.

L'imageur électronique 10 peut correspondre à l'écran d'un téléphone portable, ayant par exemple une résolution de 160 dpi, permettant ainsi d'obtenir une trame de révélation dont les pixels sont espacés d'environ 159 µm.

L'image combinée 2 présente sur l'article de sécurité 1 peut figurer dans une fenêtre traversante de l'article de sécurité 1, scellée par une bande plastique transparente constituant le substrat 90 de l'article de sécurité. La bande plastique transparente peut présenter des propriétés de filtre polarisant circulaire.

L'article de sécurité 1 comportant la bande plastique transparente polarisante sur laquelle est formée l'image combinée 2 peut être fabriqué de sorte que les propriétés de polarisation soient conservées sur les zones constitutives de l'image combinée, représentant par exemple plusieurs positions successives d'une spirale. Pour ce faire, on peut réaliser l'image combinée 2 comme décrit précédemment, par exemple en imprimant la bande plastique avec une encre spécifique apportant une propriété de polarisation ou par chauffage, par exemple avec un laser, des zones devant être dépourvues de propriétés polarisantes.

On a représenté sur les figures 24 à 26 un autre exemple de mise en oeuvre du procédé selon l'invention.

Dans cet exemple, l'imageur électronique 10 sous forme d'écran comporte une première partie 30a de la deuxième image sous forme de trame de révélation 3a, comme on peut le voir sur la figure 24.

L'article de sécurité 1 comporte l'autre partie 30b de la deuxième image sous forme de trame de révélation 3b, par exemple dans une fenêtre au moins partiellement transparente de l'article. De plus, l'article de sécurité 1 comporte la première image 20 sous forme d'image combinée 2 dans une fenêtre de l'article comportant un substrat 90 transparent ou translucide, comme on peut le voir sur la figure 25.

Lorsque l'article de sécurité 1 est plié sur lui-même de façon à superposer l'image combinée 2 à la partie 3b de la trame de révélation, le substrat 90 étant situé entre la première image 20 et la partie 3b de la trame de révélation, puis superposé à l'imageur électronique 10 de façon à superposer l'image combinée 2 et la partie 3b de la trame de révélation à la partie 3a de la trame de révélation formée sur l'écran de l'imageur électronique 10, il est possible de mettre en oeuvre le procédé selon l'invention par changement de l'angle d'observation de la partie de l'article de sécurité 1 comportant l'image combinée 2 et de la partie de l'article de sécurité 1 comportant la partie 3b de la trame de révélation, pour permettre la reconstitution de la trame de révélation et l'observation des images imbriquées, comme on peut le voir sur la figure 26. L'image combinée 2 permet avantageusement l'observation d'une animation ou de deux animations par un changement de l'angle d'observation respectivement dans deux directions différentes, notamment perpendiculaires.

On a représenté sur la figure 27 un exemple d'article de sécurité 1 sous la forme d'un passeport comportant une première image 20, imprimée sous la forme d'une image combinée 2 sur un substrat 90 transparent ou translucide, et une puce RFID 60.

La puce 60 est apte à communiquer avec l'imageur électronique 10 (non représenté) pour permettre de produire la deuxième image 30 associée à la première image 20.

En particulier, lors du procédé d'authentification et/ou d'identification du passeport 1, on illumine la première image 20 avec l'imageur électronique. La puce 60 comporte une information transmise à l'imageur électronique qui projette alors la deuxième image en fonction de cette information.

On a représenté sur la figure 28 un autre exemple de mise en oeuvre du procédé selon l'invention.

Dans cet exemple, l'article de sécurité 1, sous forme de passeport, comporte une première image 20 sous forme d'image combinée 2 obtenue par métallisation d'un film plastique transparent 90 inséré dans le passeport selon une fenêtre.

Le passeport 1, notamment l'image combinée 2, est photographié et/ou filmé par une caméra numérique 70 appartenant ou reliée à l'imageur électronique. Un programme de reconnaissance peut alors permettre de reconnaître l'image combinée 2 et d'acquérir depuis une base de données une deuxième image associée à la première image. La base de données est par exemple stockée sur un serveur sécurisé. La deuxième image ainsi obtenue est affichée et/ou projetée par l'imageur électronique pour permettre d'authentifier et/ou d'identifier le passeport 1 par changement de l'angle d'observation des première et deuxième images superposées.

On a représenté sur la figure 29 un article de sécurité 1 sous forme d'un billet de banque.

L'article de sécurité 1 comporte une première image 20 imprimée sur un substrat 90 transparent ou translucide, représentant par exemple le visage d'une personne, cette première image 20 comportant une image combinée 2, par exemple au niveau des cheveux de la personne.

Pour authentifier et/ou identifier le billet de banque 1, il est par exemple possible de photographier le billet, notamment la première image 20, et de produire une deuxième image associée à la première image, cette deuxième image étant obtenue à partir de la photographie du billet.

Par exemple, l'imageur électronique est un téléphone portable capable de photographier le billet de banque, et un programme interne au téléphone portable permet de télécharger une deuxième image associée à la première image qui peut être ensuite affichée sur l'écran du téléphone portable pour mettre en oeuvre le procédé selon l'invention.

Selon une variante, ledit programme interne au téléphone portable permet de générer ladite deuxième image associée à ladite première image.

On a représenté sur la figure 30, en coupe, un exemple d'article de sécurité comportant des zones luminescentes.

L'article de sécurité 1 comporte un substrat 90 transparent ou translucide, sur la première face 90a duquel est imprimée une couche 81 luminescente, notamment fluorescente et/ou phosphorescente. La couche 81 luminescente recouvre par exemple entièrement le substrat 90.

De plus, une première image 20, par exemple sous forme d'image combinée, est imprimée avec une encre opaque noire sur la couche 81 luminescente.

L'imageur électronique associé, non représenté, est apte à projeter une deuxième image 30, non représentée, du côté de la deuxième face 90b du substrat 90, au moins partiellement superposée à la première image 20 sous un éclairage ultraviolet (UV) ou normal, la première image 20 étant à la fois visible sous éclairage normal et sous éclairage UV.

L'expression « comportant un » est synonyme de « comportant au moins un ».

## Revendications

1. Procédé d'authentification et/ou d'identification d'un article de sécurité (1) comportant :
- un substrat (90) transparent ou translucide, et
- du côté d'une première face (90a, 90b) du substrat, une première image (20),
le procédé comportant l'étape consistant à :
- superposer au moins partiellement la première image (20) de l'article (1) avec une deuxième image (30) produite par un imageur électronique (10), la deuxième image (30) étant située du côté d'une deuxième face (90a, 90b) du substrat, opposée à la première,
et étant **caractérisé en ce qu'**il comporte l'étape consistant à :
- observer une information d'authentification et/ou d'identification de l'article de sécurité (1) lors d'un changement de l'angle d'observation des première (20) et deuxième (30) images superposées,
le changement d'angle d'observation se faisant par mouvement de l'observateur relativement aux première et deuxième images superposées, relativement à l'imageur électronique et à l'article de sécurité, les première et deuxième images superposées étant immobiles, ou par déplacement des première et deuxième images superposées relativement à l'observateur, par déplacement de l'article de sécurité et de l'imageur électronique, l'observateur étant immobile, et les première et deuxième images étant immobiles l'une par rapport à l'autre, ou sans mouvement relatif entre l'article et l'imageur électronique, par déplacement de l'observateur relativement à l'article et à l'imageur électronique.

2. Procédé selon la revendication 1, le substrat (90) s'étendant d'un bord à l'autre de l'article de sécurité (1).

3. Procédé selon la revendication 1, le substrat (90) étant situé localement sur l'article de sécurité (1).

4. Procédé selon l'une des revendications précédentes, la deuxième image (30) étant affichée sur l'imageur électronique (10), notamment sur un écran de l'imageur électronique (10).

5. Procédé selon l'une des revendications 1 à 3, la deuxième image (30) étant projetée par l'imageur électronique (10), notamment sur un fond (50) ou sur l'article de sécurité (1).

6. Procédé selon l'une quelconque des revendications précédentes, un effet de mouvement ou d'animation étant observé, notamment un effet de mouvement ou d'animation d'images imbriquées (2a), lors d'un changement de l'angle d'observation des première (20) et deuxième (30) images superposées.

7. Procédé selon l'une quelconque des revendications précédentes, la première image (20) et la deuxième image (30) présentant des propriétés de polarisation, la deuxième image (30) étant notamment produite par l'imageur électronique (10) au moyen d'une lumière polarisée, et la première image (20) comportant notamment un filtre polarisant.

8. Procédé selon la revendication 7, dans lequel, avant d'observer l'information d'authentification et/ou d'identification lors du changement de l'angle d'observation des première et deuxième images (20, 30) superposées, on positionne les première et deuxième images (20, 30) selon une orientation de l'une par l'autre permettant à l'une de masquer partiellement l'autre.

9. Procédé selon l'une quelconque des revendications précédentes, l'article de sécurité (1) comportant plusieurs premières images (20) différentes et/ou l'imageur électronique (10) produisant plusieurs deuxièmes images (30a, 30b, 30c, 30d) différentes.

10. Procédé selon l'une quelconque des revendications précédentes, la première image (20) comportant une trame de révélation (3) et la deuxième image (30) comportant une image combinée (2) comportant au moins deux images imbriquées (2a), l'mage combinée (2) étant associée à la trame de révélation (3), ou inversement ; l'imageur électronique (10) comportant notamment un écran dont les pixels servent au moins partiellement à former la deuxième image (30) sous la forme d'une trame de révélation (3) ; les lignes et/ou les points de trame de la trame de révélation (3) étant notamment formés par les pixels de l'écran de l'imageur électronique (10).

11. Procédé selon la revendication 10, la trame de révélation (3) étant formée par une succession de lignes multichrome formées par des pixels de l'écran de l'imageur électronique (10), notamment des lignes comportant des pixels présentant trois cellules rouge, verte et bleue, les pixels étant espacés les uns des autres de manière à former des lignes monochromes dépourvues de pixels, notamment de couleur noire.

12. Procédé selon l'une quelconque des revendications précédentes, l'article de sécurité (1) comportant un microcircuit intégré (60) apte à communiquer avec l'imageur électronique (10) pour que celui-ci produise la deuxième image (30) associée à la première image (20).

13. Procédé selon l'une quelconque des revendications précédentes, la première image (20) étant définie par un premier matériau polarisant superposé à un deuxième matériau polarisant, le premier matériau étant de préférence une impression de cristaux liquides cholestériques et le deuxième matériau étant de préférence un substrat linéairement polarisant.

14. Article de sécurité (1) pour la mise en oeuvre du procédé selon la revendication 1, comportant une première image (20) superposable à au moins une deuxième image (30) produite par un imageur électronique (10), la première image (20) étant définie par un substrat polarisant rendu localement non polarisé de manière à former ladite première image (20), ou par une impression d'une encre polarisante.

15. Article selon la revendication 14, comportant plusieurs premières images (20) différentes, chaque première image (20) étant superposable à au moins une deuxième image (30) produite par un imageur électronique (10) adapté à cette première image, les imageurs électroniques (10) ayant notamment des résolutions différentes.

16. Ensemble comportant :
- un imageur électronique (10), et
- un article de sécurité (1), comportant un substrat (90) transparent ou translucide, et, du côté d'une première face (90a, 90b) du substrat, une première image (20),
la première image (20) étant apte à être superposée à au moins une deuxième image (30) produite par l'imageur électronique (10) et située du côté d'une deuxième face (90a, 90b) du substrat, opposée à la première,
une information d'authentification et/ou d'identification de l'article de sécurité (1) étant apte à être observée lors d'un changement de l'angle d'observation des première (20) et deuxième (30) images superposées,
le changement d'angle d'observation se faisant par mouvement de l'observateur relativement aux première et deuxième images superposées, relativement à l'imageur électronique et à l'article de sécurité, les première et deuxième images superposées étant immobiles, ou par déplacement des première et deuxième images superposées relativement à l'observateur, par déplacement de l'article de sécurité et de l'imageur électronique, l'observateur étant immobile, et les première et deuxième images étant immobiles l'une par rapport à l'autre, ou sans mouvement relatif entre l'article et l'imageur électronique, par déplacement de l'observateur relativement à l'article et à l'imageur électronique.

## Patentansprüche

1. Verfahren zur Authentifizierung und/oder Identifizierung eines Sicherheitselements (1), umfassend:
- ein durchsichtiges oder durchscheinendes Substrat (90) und
- ein erstes Bild (20) auf der Seite einer ersten Fläche (90a, 90b),
wobei das Verfahren den Schritt umfasst, bestehend aus:
- wenigstens teilweises Überlagern des ersten Bildes (20) des Elements (1) mit einem zweiten Bild (30), das durch einen elektronischen Bildgeber (10) produziert ist, wobei das zweite Bild (30) auf der Seite einer zweiten Fläche (90a, 90b) gegenüber dem ersten angeordnet ist,
und **dadurch gekennzeichnet ist, dass** es den Schritt umfasst, bestehend aus:
- Beobachten einer Authentifizierungs- und/oder Identifizierungsinformation des Sicherheitselements (1) bei einer Änderung des Beobachtungswinkels des ersten (20) und zweiten (30) überlagerten Bildes,
wobei die Änderung des Beobachtungswinkels per Bewegung des Beobachters relativ zu dem ersten und zweiten überlagerten Bild relativ zu dem elektronischen Bildgeber und dem Sicherheitselement erfolgt, wobei das erste und zweite überlagerte Bild unbeweglich sind, oder per Verschieben des ersten und zweiten überlagerten Bildes relativ zum Beobachter, per Verschieben des Sicherheitselements und des elektronischen Bildgebers erfolgt, wobei der Beobachter unbeweglich ist, und wobei das erste und zweite Bild im Verhältnis zueinander unbeweglich oder ohne relative Bewegung zwischen dem Element und dem elektronischen Bildgeber per Verschiebung des Beobachters relativ zum Element und dem elektronischen Bildgeber sind.

2. Verfahren nach Anspruch 1, wobei sich das Substrat (90) von einem Rand zum anderen des Sicherheitselements (1) erstreckt.

3. Verfahren nach Anspruch 1, wobei das Substrat (90) lokal auf dem Sicherheitselement (1) angeordnet ist.

4. Verfahren nach einem der voranstehenden Ansprüche, wobei das zweite Bild (30) auf dem elektronischen Bildgeber (10), insbesondere auf einem Bildschirm des elektronischen Bildgebers (10) angezeigt ist.

5. Verfahren nach einem der Ansprüche 1 bis 3, wobei das zweite Bild (30) durch den elektronischen Bildgeber (10) insbesondere auf einen Hintergrund (50) oder auf das Sicherheitselement (1) geworfen ist.

6. Verfahren nach irgendeinem der voranstehenden Ansprüche, wobei ein Bewegungs- und Animationseffekt, insbesondere ein Bewegungs- oder Animationseffekt von verschachtelten Bildern (2a) bei einer Änderung des Beobachtungswinkels des ersten (20) und zweiten (30) überlagerten Bildes beobachtet wird.

7. Verfahren gemäß irgendeinem der voranstehenden Ansprüche, wobei das erste Bild (20) und das zweite Bild (30) Polarisationseigenschaften aufweisen, wobei das zweite Bild (30) insbesondere durch den elektronischen Bildgeber (10) mittels eines polarisierten Lichts produziert ist und das erste Bild (20) insbesondere einen polarisierenden Filter umfasst.

8. Verfahren nach Anspruch 7, bei dem vor dem Beobachten der Authentifizierungs- und/oder Identifizierungsinformation beim Ändern des Beobachtungswinkels des ersten und zweiten überlagerten Bildes (20, 30) das erste und zweite Bild (20, 30) gemäß einer Ausrichtung jeweils zueinander dem einen das teilweise Abdecken des anderen ermöglicht ist.

9. Verfahren nach irgendeinem der voranstehenden Ansprüche, wobei das Sicherheitselement (1) mehrere unterschiedliche erste Bilder (20) umfasst und/oder der elektronische Bildgeber (10) mehrere zweite unterschiedliche Bilder (30a, 30b, 30c, 30d) produziert.

10. Verfahren nach irgendeinem der voranstehenden Ansprüche, wobei das erste Bild (20) eine Entwicklungsstruktur (3) umfasst und das zweite Bild (30) ein kombiniertes Bild (2) umfasst, umfassend wenigstens zwei verschachtelte Bilder (2a), wobei das kombinierte Bild (2) der Entwicklungsstruktur (3) zugeordnet ist oder umgekehrt; wobei der elektronische Bildgeber (10) insbesondere einen Bildschirm umfasst, dessen Pixel wenigstens teilweise zum Formen des zweiten Bildes (30) in Form einer Entwicklungsstruktur (3) dienen; wobei die Zeilen und/oder die Strukturpunkte der Entwicklungsstruktur (3) insbesondere durch die Pixel des Bildschirms des elektronischen Bildgebers (10) geformt sind.

11. Verfahren nach Anspruch 10, wobei die Entwicklungsstruktur (3) durch eine Folge von mehrfarbigen Zeilen geformt ist, die durch Pixel des Bildschirms des elektronischen Bildgebers (10), insbesondere der Zeilen geformt sind, die drei rote, grüne und blaue Zellen umfassen, wobei die Pixel derart voneinander beabstandet sind, dass einfarbige Zeilen ohne Pixel, insbesondere in schwarzer Farbe, geformt sind.

12. Verfahren nach irgendeinem der voranstehenden Ansprüche, wobei das Sicherheitselement (1) eine integrierte Mikroschaltung (60) umfasst, die geeignet ist, mit dem elektronischen Bildgeber (10) zu kommunizieren, damit dieser das dem ersten Bild (20) zugeordnete zweite Bild (30) produziert.

13. Verfahren gemäß irgendeinem der voranstehenden Ansprüche, wobei das erste Bild (20) durch ein erstes polarisierendes Material definiert ist, das einem zweiten polarisierenden Material überlagert ist, wobei das erste Material bevorzugt ein Aufdruck aus cholesterinischen Flüssigkristallen ist und das zweite Material bevorzugt ein lineares polarisierendes Substrat ist.

14. Sicherheitselement (1) für die Umsetzung des Verfahrens nach Anspruch 1, umfassend ein erstes Bild (20), das wenigstens einem zweiten Bild (30) überlagerbar ist, das von einem elektronischen Bildgeber (10) oder durch einen Aufdruck einer polarisierenden Druckfarbe produziert ist, wobei das erste Bild (20) durch ein polarisierendes Substrat definiert ist, das stellenweise derart nicht polarisierend gemacht ist, dass das genannte erste Bild (20) geformt ist.

15. Sicherheitselement 14, umfassend mehrere unterschiedliche erste Bilder (20), wobei jedes erste Bild (20) wenigstens einem zweiten Bild (30) überlagerbar ist, das durch einen elektronischen Bildgeber (10) produziert ist, der an dieses erste Bild angepasst ist, wobei die elektronischen Bildgeber (10) insbesondere unterschiedliche Auflösungen aufweisen.

16. Gruppe, umfassend:
- einen elektronischen Bildgeber (10) und
- ein Sicherheitselement (1), das ein durchsichtiges oder durchscheinendes Substrat (90) und auf der Seite einer ersten Fläche (90a, 90b) des Substrats ein erstes Bild (20) umfasst,
wobei das erste Bild (20) geeignet ist, wenigstens einem zweiten Bild (30) überlagert zu sein, das von dem elektronischen Bildgeber (10) produziert ist und auf der Seite einer zweiten Fläche (90a, 90b) des Substrats gegenüber der ersten angeordnet ist,
wobei eine Authentifizierungs- und/oder Identifizierungsinformation des Sicherheitselements (1) geeignet ist, bei einer Änderung des Beobachtungswinkels des ersten (20) und zweiten (30) überlagerten Bildes beobachtet zu werden,
wobei die Änderung des Beobachtungswinkels per Bewegung des Beobachters relativ zu dem ersten und zweiten überlagerten Bild relativ zum elektronischen Bildgeber und dem Sicherheitselement erfolgt, wobei das erste und zweite überlagerte Bild unbeweglich sind, oder per Verschieben des ersten und zweiten überlagerten Bildes relativ zum Beobachter, per Verschieben des Sicherheitselements und des elektronischen Bildgebers, wobei der Beobachter unbeweglich ist, und das erste und zweite Bild im Verhältnis zueinander unbeweglich oder ohne Bewegung relativ zwischen dem Element und dem elektronischen Bildgeber per Verschieben des Beobachters relativ zu dem Element und dem elektronischen Bildgeber sind, erfolgt.

## Claims

1. A method for authenticating and/or identifying a security article (1) comprising:
- a transparent or translucent substrate (90), and
- on the side of a first face (90a, 90b) of the substrate, a first image (20),
the method comprising the step consisting in:
- superimposing at least partially the first image (20) of the article (1) with a second image (30) produced by an electronic imager (10), the second image (30) being situated on the side of a second face (90a, 90b) of the substrate, opposite from the first face,
and being **characterized in that** it comprises the step consisting in:
- observing an authentication and/or identification information item for the security article (1) during a change of the angle of observation of the first (20) and second (30) superimposed images,
the change of angle of observation being effected by motion of the observer in relation to the first and second superimposed images, in relation to the electronic imager and to the security article, the first and second superimposed images being stationary, or by displacement of the first and second superimposed images in relation to the observer, by displacement of the security article and of the electronic imager, the observer being stationary, and the first and second images being stationary with respect to one another, or without relative motion between the article and the electronic imager, by displacement of the observer in relation to the article and to the electronic imager.

2. The method as claimed in claim 1, the substrate (90) extending from one edge to the other of the security article (1).

3. The method as claimed in claim 1, the substrate (90) being situated locally on the security article (1).

4. The method as claimed in one of the preceding claims, the second image (30) being displayed on the electronic imager (10), especially on a screen of the electronic imager (10).

5. The method as claimed in one of claims 1 to 3, the second image (30) being projected by the electronic imager (10), especially onto a background (50) or onto the security article (1).

6. The method as claimed in any one of the preceding claims, an effect of motion or of animation being observed, especially an effect of motion or of animation of interleaved images (2a), during a change of the angle of observation of the first (20) and second (30) superimposed images.

7. The method as claimed in any one of the preceding claims, the first image (20) and the second image (30) exhibiting polarization properties, the second image (30) being especially produced by the electronic imager (10) by means of polarized light, and the first image (20) comprising a polarizing filter.

8. The method as claimed in claim 7, in which, before observing the authentication and/or identification information item during the change of the angle of observation of the first and second superimposed images (20, 30), the first and second images (20, 30) are positioned according to an orientation of one by the other allowing one to partially mask the other.

9. The method as claimed in any one of the preceding claims, the security article (1) comprising several different first images (20) and/or the electronic imager (10) producing several different second images (30a, 30b, 30c, 30d).

10. The method as claimed in any one of the preceding claims, the first image (20) comprising a revelation frame (3) and the second image (30) comprising a combined image (2) comprising at least two interleaved images (2a), the combined image (2) being associated with the revelation frame (3), or vice versa; the electronic imager (10) comprising especially a screen whose pixels serve at least partially to form the second image (30) in the form of a revelation frame (3) ; the frame lines and/or the dots of the revelation frame (3) being especially formed by the pixels of the screen of the electronic imager (10).

11. The method as claimed in claim 10, the revelation frame (3) being formed by a succession of multichrome lines formed by pixels of the screen of the electronic imager (10), especially lines comprising pixels exhibiting three cells, red, green and blue, the pixels being spaced mutually apart so as to form monochrome lines devoid of pixels, especially black in color.

12. The method as claimed in any one of the preceding claims, the security article (1) comprising an integrated microcircuit (60) able to communicate with the electronic imager (10) so that the latter produces the second image (30) associated with the first image (20).

13. The method as claimed in any one of the preceding claims, the first image (20) being defined by a first polarizing material superimposed on a second polarizing material, the first material preferably being a printing of cholesteric liquid crystals and the second material preferably being a linearly polarizing substrate.

14. A security article (1), especially for the implementation of the method as claimed in claim 1, comprising a first image (20) superimposable on at least one second image (30) produced by an electronic imager (10), the first image (20) being defined by a substrate polarizing rendered locally non-polarized so as to form the first image (20), or by a printing of a polarizing ink.

15. The article as claimed in claim 14, comprising several different first images (20), each first image (20) being superimposable on at least one second image (30) produced by an electronic imager (10) adapted to this first image, the electronic imagers (10) having, especially, different resolutions.

16. Assembly comprising:
- an electronic imager (10), and
- a security article (1), comprising a transparent or translucent substrate (90), and, on the side of a first face (90a, 90b) of the substrate, a first image (20),
the first image (20) being superimposable on at least one second image (30) produced by the electronic imager (10) and located on the side of a second face (90a, 90b) of the substrate, opposite to the first,
an authentication and/or identification information item for the security article (1) being able to be observed during a change of the angle of observation of the first (20) and second (30) superimposed images,
the change of angle of observation being effected by motion of the observer in relation to the first and second superimposed images, in relation to the electronic imager and to the security article, the first and second superimposed images being stationary, or by displacement of the first and second superimposed images in relation to the observer, by displacement of the security article and of the electronic imager, the observer being stationary, and the first and second images being stationary with respect to one another, or without relative motion between the article and the electronic imager, by displacement of the observer in relation to the article and to the electronic imager.
